# EUROPÄISCHE PATENTSCHRIFT

(11) **EP 2 248 648 B1**
(45) Veröffentlichungstag und Bekanntmachung des Hinweises auf die Patenterteilung: **30.03.2016**
(21) Anmeldenummer: 09006098.9
(22) Anmeldetag: 05.05.2009
(51) Int. Cl.: B29C 44/12, F16L 59/20, B29C 33/12, B29C 33/30, B29C 33/76, F16L 59/14

(54) **Verfahren und Vorrichtung zur Herstellung eines wärmeisolierten Leitungsrohrs**
Method and device for producing a heat-insulated conduit
Procédé et dispositif de fabrication d'une conduite isolée thermiquement

(43) Veröffentlichungstag der Anmeldung: 10.11.2010
(73) Patentinhaber: Brugg Rohr AG, Holding, 5200 Brugg (CH)
(72) Erfinder: Knecht, Karl, 79736 Rickenbach-Egg (DE)
(74) Vertreter: Schalch, Rainer

(56) Entgegenhaltungen:
- EP-B- 1 699 611
- WO-A-00/47387
- DE-A1- 19 905 275
- GB-A- 344 356

## Beschreibung

### Technisches Gebiet

Die Erfindung betrifft ein Verfahren zur diskontinuierlichen Herstellung eines wärmeisolierten Leitungsrohrs, umfassend das Positionieren mindestens eines Innenrohrs in einem Aussenrohr unter Bildung eines Hohlraums zwischen der Aussenwandung des Innenrohrs und der Innenwandung des Aussenrohrs sowie das Ausschäumen des Hohlraums gemäß Anspruch 1. Ferner betrifft die Erfindung eine Vorrichtung zur Herstellung derartiger Leitungsrohre, gemäß Anspruch 7.

### Stand der Technik

Die Herstellung der eingangs genannten Leitungsrohre erfolgt dadurch, dass das Innenrohr mittels im fertigen Leitungsrohr verbleibenden Abstandselementen aus Kunststoff im Aussenrohr positioniert wird. Dabei ist die Anordnung der Abstandselemente aufwendig und diese bilden im fertigen Leitungsrohr unerwünschte Wärme- bzw. Kältebrücken. Die Positionierung des Innenrohrs ist zudem nur bei den Abstandselementen genau eingehalten. Das Innenrohr kann vor dem Schäumen zwischen den Abstandselementen mehr oder weniger durchhängen, was nur durch eine grössere Zahl von Abstandselementen vermieden werden kann. Das Ausschäumen des Hohlraums erfolgt mit einer langen Schäumlanze, welche von einem ersten Ende in den Hohlraum zwischen Innen- und Aussenrohr eingeführt und bis zum verschlossenen zweiten Ende vorgeschoben wird. Dann wird durch die Lanze das aufschäumende Isolationsmaterial eingebracht, wobei die Lanze zum ersten Ende hin zurückgezogen wird, bis der ganze Hohlraum möglichst gleichmässig mit Isolierschaum gefüllt ist. Dabei sind die Abstandselemente so geformt und angeordnet, dass sie die Lanze möglichst nicht behindern, doch wird das Einbringen der Isolation dennoch durch die Abstandselemente erschwert.

Das Dokument WO 00/47387 offenbart ein Verfahren zur Herstellung eines wärmeisolierten Leitungsrohrs, bei dem ein Innenrohr in ein Aussenrohr eingebracht wird, wobei ein Hohlraum zwischen den beiden Rohren ausgeschäumt wird. Das Innenrohr wird durch Zugkraft gerade gehalten.

### Darstellung der Erfindung

Der Erfindung liegt die Aufgabe zu Grunde, ein Verfahren zu schaffen, welches die genannten Nachteile vermeidet.

Dies wird bei dem eingangs genannten Verfahren dadurch erzielt, dass das Innenrohr durch Zugkraft in Längsrichtung der Rohre im Wesentlichen gerade gehalten und derart gehalten umschäumt wird. Dabei werden eine sich in Längsrichtung der herzustellenden Rohre erstreckende Rohraufnahme, beidseits der Längsenden der Rohraufnahme angeordnete Spannmittel, sowie mindestens ein die Spannmittel lösbar verbindendes Zugglied verwendet. Die Zugkraft wird auf das Zugglied ausgeübt, welches dadurch gerade verlaufend gespannt wird, wodurch das mit dem Zugglied in Verbindung stehende Innenrohr die gerade verlaufende Form erhält. Die Spannmittel umfassen einen Antrieb, durch welchen die einstellbare Zugkraft auf das Zugglied ausgeübt wird. Ein Rohr wird entlang seiner Längserstreckung mindestens abschnittsweise vom Zugglied abgestützt, wobei als Zugglied ein Stahlseil verwendet wird, welches entlang seiner Längserstreckung mehrere für das Innenrohr bestimmte Zentrierelemente aufweist. Die Zentrierelemente sind durch koaxial zum Stahlseil verlaufende Abstandshalter voneinander beabstandet.

Es hat sich gezeigt, dass das Innenrohr durch eine Zugkraft derart gerade gehalten werden kann, dass es im Aussenrohr auch ohne Abstandselemente gerade verlaufend gehalten werden kann. Damit entfallen die genannten Nachteile.

Die gerade Form des Innenrohrs kann, nicht erfindungsgemäß, durch Zugkraft auf das Rohr selber bewirkt werden, was insbesondere bei Innenrohren aus Metall vorgesehen sein kann. Bei der vorliegenden Lösung wird indes die Zugkraft nicht an dem Innenrohr selber angelegt, sondern am Zugglied, auf welches sich das Innenrohr abstützt. Das Zugglied ist als Stahlseil ausgeführt.

Das Innenrohr muss jedenfalls beim Herstellungsschritt des Umschäumens des Innenrohrs bzw. der Ausschäumung des Hohlraums gerade gehalten werden. Das Innenrohr wird aber bevorzugt bereits beim vorgängigen Schritt der Positionierung im Aussenrohr durch die Zugkraft gerade gehalten. Zur Positionierung kann dann die Lage des Aussenrohrs zu dem gerade gehaltenen Innenrohr eingestellt werden, das dabei lagefest gehalten wird. In einer anderen Variante wird das Innenrohr auch im noch nicht gerade gezogenen Zustand lediglich mit seinen Enden in die gewünschte Lage relativ zum Aussenrohr gebracht, worauf erst dann das Innenrohr durch die Zugkraft für das Schäumen in die gerade Form gebracht wird.

Bei einer bevorzugten Ausführung wird zunächst das Innenrohr auf die Elemente des Zugglieds aufgeschoben bzw. das Zugglied durch das Innenrohr gezogen. Danach wird das Innenrohr samt Zugglied in das Aussenrohr eingebracht. Mittels des Zuggliedes wird dann das Innenrohr in die völlig gerade verlaufende Form gebracht, indem die Zugkraft an den Enden des Zuggliedes aufgebracht und dieses gerade gespannt wird, worauf die Positionierung zur Bildung des definierten Hohlraums erfolgt, indem das Aussenrohr in seiner Lage verändert wird, bis die gewünschte Position zum lagefesten Innenrohr gegeben ist.

Der Erfindung liegt weiter die Aufgabe zu Grunde eine Vorrichtung zur Herstellung von wärmeisolierten Leitungsrohren zu schaffen, bei welcher die genannten Nachteile nicht auftreten.

Diese Aufgabe wird mit einer Vorrichtung gemäss Anspruch 7 gelöst.

### Kurze Darstellung der Zeichnungen

Im Folgenden werden Ausführungsbeispiele der Erfindung anhand der Zeichnungen näher erläutert. Dabei zeigt

Figur 1 eine Vertikalschnittansicht durch ein Leitungsrohr in Längsrichtung sowie die schematisch Vorrichtung zu seiner Herstellung; und

Figur 2 eine Vertikalschnittansicht durch das Leitungsrohr in Querrichtung.

### Wege zur Ausführung der Erfindung

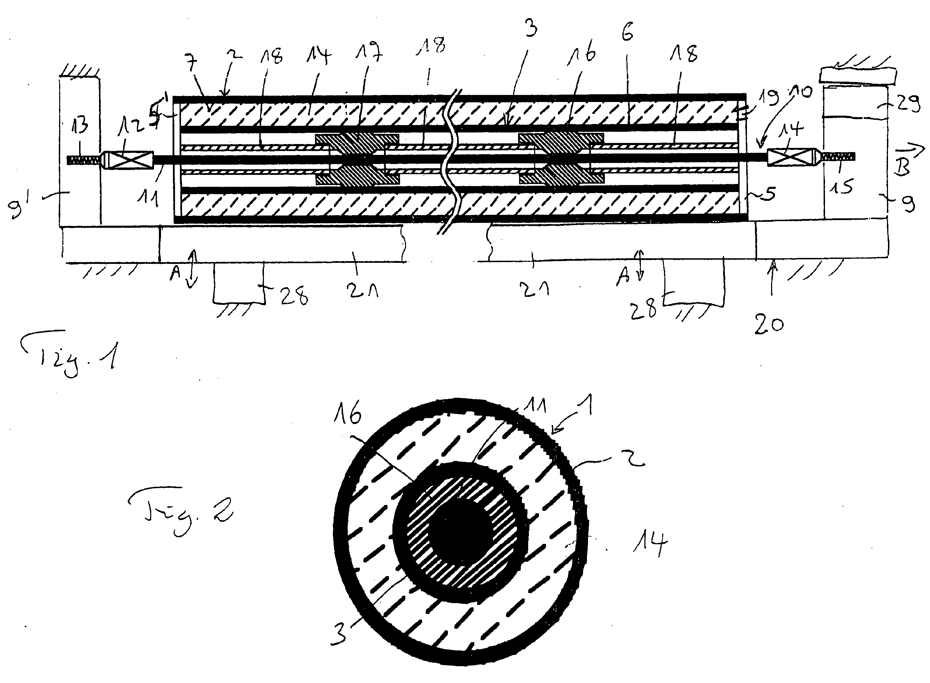

Figur 1 zeigt einen vertikalen Schnitt durch die Längsachse eines Leitungsrohrs mit Wärmeisolierung, wie es gemäss der vorliegenden Erfindung hergestellt wird. Weiter ist in der Figur schematisch eine bevorzugte Ausführungsform der Vorrichtung zur Durchführung des Verfahrens dargestellt. Bei dem Verfahren wird diskontinuierlich gearbeitet, d.h. es werden bei der Schäumung stationär gehaltene einzelne Rohre definierter Länge hergestellt.

Das Leitungsrohr 1 weist dabei ein Aussenrohr 2 auf, welches in der Regel aus Kunststoff besteht, z.B. aus Polyethylen. In dem Aussenrohr ist ein Innenrohr 3 angeordnet, wobei der Durchmesser des Innenrohr deutlich geringer ist, als der Durchmesser des Aussenrohrs, so dass sich zwischen der Innenwandung 7 des Aussenrohrs 2 und der Aussenwandung 6 des Innenrohrs 3 bei der Herstellung des Leitungsrohrs zunächst ein Hohlraum 4 befindet, welcher während der Herstellung mit einem Isolierschaum ausgefüllt wird, z.B. einem Polyurethanschaum, so dass am Ende des Ausschäumens der Hohlraum 4 mit dem Isolationsmaterial 14 gefüllt ist. Dies härtet aus und bildet dann neben der Wärmeisolationsschicht auch die Fixierung des Innenrohrs 3 im Aussenrohr 2.

Zur Herstellung eines solchen Leitungsrohrs 1 muss das Innenrohr 3 im Aussenrohr 2 positioniert und während des Schäumens festgehalten werden. Dabei ist es für die Sicherstellung homogener Isolationseigenschaften des fertigen Leitungsrohrs entlang seiner Länge wesentlich, dass das Innenrohr möglichst geradlinig verläuft, damit der Hohlraum möglichst gleichmässige Form aufweist.

Gemäss der Erfindung erfolgt das Festhalten in gerader Form des Innenrohrs 3 dadurch, dass eine Zugkraft in Längsrichtung der Rohre ausgeübt wird. Durch diese Zugkraft wird nicht erfindungsgemäss das Innenrohr 3 selber oder erfindungsgemäss ein separates Zugglied 10 von dem das Innenrohr gehalten ist, so gespannt, dass es im Wesentlichen geradlinig und nicht durchhängend verläuft. Die Ausübung einer Zugkraft auf das Innenrohr 3 selber kommt vor allem in Frage, wenn das Innenrohr 3 aus Metall besteht. Bevorzugterweise ist indes auch das Innenrohr ein Kunststoffrohr, z.B. ein Innenrohr aus ABS (Acrylnitrilbutadienacrylat). In diesem Fall könnte durch das Anlegen einer Zugkraft in Längsrichtung des Innenrohres an das Rohr selber eine Längung des Rohres erfolgen, was nicht gewünscht ist. Daher wird ein separates Zugglied eingesetzt, an welchem sich das Innenrohr abstützt. Das Zugglied kann ausserhalb des Innenrohrs angeordnet sein, und z.B. ein Metallband sein, welches gerade verlaufende gespannt werden kann, und auf welchem sich das Innenrohr abstützt. Dieses Band verbleibt dann nach der Schäumung im Leitungsrohr 1. Die bevorzugte Lösung wird allerdings von einem Zugglied 10 gebildet, welches im Innenrohr verläuft und dadurch nach dem Schäumvorgang bzw. dem Aushärten des Schaumes aus dem Innenrohr entnommen werden kann.

In Figur 1 ist ein Beispiel dargestellt, bei welchem das Zugglied 10 von einem Seil gebildet ist, insbesondere von einem Stahlseil. Entlang dieses Seiles sind bevorzugt Elemente, hier die Zentrierelemente 16, 17, angeordnet, welche das Rohr halten bzw. abstützen. Die Elemente können fest an dem Seil angeordnet sein. Bevorzugterweise umfassen sie das Seil aber so, dass sie auf diesem verschiebbar sind. Der gegenseitige Abstand der Zentrierelemente wird durch Abstandshalter 18 bestimmt, welche die Elemente, insbesondere die Zentrierelemente, verbinden. Solche Abstandshalter 18 können auch zu den Deckeln 4 und 5 hin vorgesehen sein, welche bei der Herstellung das Rohr stirnseitig verschliessen, um die Schäumung zu ermöglichen. Die bereits erwähnte Schaumlanze wird dann durch mindestens eine Öffnung 19 in einem der Deckel in den Hohlraum 4 eingeführt, damit dieser ausgeschäumt werden kann. Dazu wird die Schaumlanze von der Öffnung 19 her bis zum gegenüberliegenden Deckel 4 eingeführt und während des Austritts des Schaums aus der Lanze nach und nach in Richtung des Deckels 5 zurückgezogen, bis der gesamte Hohlraum mit aufschäumendem Material gefüllt ist. Während dieses Vorganges ist das Innenrohr 3 auf dem durch Zugkraft gespanntem Zugglied 10 gerade gehalten und durch dieses auch festgehalten, so dass es durch den Schäumdruck nicht verschoben werden kann. Festgehalten wird bevorzugt auch das Aussenrohr 2, welches in der dargestellten Vorrichtung auf dem Bett 21 einer nicht im Detail dargestellten Rohraufnahme 20 liegt. Das Aussenrohr 2 wird dabei bevorzugt durch nicht dargestellte Mittel an der Rohraufnahme in seiner Lage fixiert, damit es durch den Schäumdruck nicht verschoben werden kann.

Die Zugkraft auf das Zugglied 10 wird durch beliebige Mittel erzeugt, die Teile der Rohraufnahme sein können oder separate Mittel. Zum Beispiel kann dies wie dargestellt dadurch erfolgen, dass das Zugglied 10 einseitig in einem vorrichtungsfesten Block 9' fixiert ist und auf der anderen Seite in einem in Richtung des Pfeiles B (und auch in Gegenrichtung) angetrieben bewegbaren Block 9 fixiert ist. Der Antrieb in Richtung des Pfeiles B zur Spannung des Zuggliedes 10 kann hydraulisch, pneumatisch oder elektromotorisch oder gegebenenfalls auch händisch durch ein dem Fachmann bekanntes Antriebsmittel 29 erfolgen. Im Falle eines Seils als Zugglied können zu dessen Einspannung in den Blöcken 9' und 9 entsprechende Seilmuffen 12, 14 mit Befestigungsmitteln 13 und 15, z.B. Gewinden, vorgesehen sein, um das Zugglied lösbar an den Mitteln, bzw. an den Elementen 9, 9', zur Ausübung der Zugkraft zu befestigen. Dadurch kann das Zugglied zur Entnahme des fertigen Leitungsrohres aus der Vorrichtung einfach aus den Zugelementen 9' und 9 gelöst werden, wenn der Block 9 in Gegenrichtung zum Pfeil B zurück gefahren wird und dadurch das Zugmittel wieder entlastet wird. Danach werden die Deckel 4 und 5 entfernt und das Zugglied 10 wird aus dem Innenrohr 3 des Leitungsrohres 1 herausgezogen. Die Zentrierelemente 16 und 17 bzw. die weiteren Zentrierelemente können dazu an ihrer Kontaktfläche zu der Innenseite des Innenrohrs 3 mit einer gleithemmenden Beschichtung oder mit Wälzkörpern versehen sein, um das Herausziehen des Zuggliedes aus dem Innenrohr zu erleichtern.

Solche Ausführungen der Zentrierelemente 16, 17 erleichtern auch das Einführen des Zuggliedes in das Innenrohr 3. Dieser Vorgang steht am Anfang der Herstellung des Leitungsrohres 1. In einem vorangehenden Schritt oder in einem nachfolgenden Schritt kann das Aussenrohr 2 über das Innenrohr 3 geschoben werden. Eine solche Einheit aus Aussenrohr 2 und Innenrohr 3 mit dem Zugglied 10 wird dann in der Vorrichtung wie gezeigt angeordnet, indem das Zugglied 10 an den Zugelementen 9' und 9 befestigt wird. Ferner wird das Aussenrohr so positioniert bzw. die Rohraufnahme mit dem Bett 21 zwischen den Zugelementen 9' und 9 wird so platziert, dass das Aussenrohr auf dem Bett 21 aufliegt. Danach wird in der Regel so vorgegangen, dass durch den Antrieb mindestens eines der Zugelemente die Zugkraft auf das Zugglied 10 ausgeübt wird, damit sich dieses spannt und völlig gerade zwischen den Elementen bzw. Zugblöcken 9' und 9 verläuft. Mit genügender Spannung des Zuggliedes 10 die zu dessen geradem Verlauf führt, weist dann auch das Innenrohr 3, welches auf dem Zugglied abgestützt ist bzw. von diesem gehalten ist, einen praktisch völlig geradlinigen Verlauf auf. Zudem ist das Innenrohr 3 damit durch das Zugglied lagefest positioniert, da dieses lagefest zwischen den Elementen 9, 9' fixiert ist. Durch ein Verschieben und Heben des Betts 21 mittels nur angedeuteter Antriebe 28, also insbesondere in Richtung der Pfeile A, sowie vorzugsweise auch in Richtung senkrecht zu diesen Pfeilen und senkrecht zur Zeichnungsebene, kann das Aussenrohr 2 zu dem gerade verlaufenden und lagefesten Innenrohr 3 positioniert werden, so dass der Hohlraum 4 auf die gewünschte Weise gebildet ist. In der Regel erfolgt die Positionierung dabei so, dass der Hohlraum eine gleichmässige, ringförmige Form hat. Das Verfahren erlaubt aber auf einfache Weise auch eine aussermittige Anordnung des Innenrohrs 3 im Aussenrohr 2. Auch können auf einfache Weise mehrere Innenrohre mit Abstand voneinander oder aneinander anliegend mittels einem oder mehreren Zuggliedern gemäss der Erfindung gerade gespannt gehalten werden. Ist die Positionierung abgeschlossen, so wird auf die erwähnte Weise mit der Schäumlanze der Isolierschaum in den Hohlraum eingebracht.

Bei stationären, diskontinuierlichen Herstellung von wärmeisolierten Leitungsrohren mit einem Innenrohr und einem Aussenrohr und einer dazwischen liegenden geschäumten Isolation kann das Innenrohr auf einem Zugglied platziert werden. Dieses wird durch Zugkraft zwischen Spannmitteln gespannt, so dass es gerade verläuft, wodurch auch das Innenrohr gerade gehalten ist. In dieser gerade gehaltenen Form kann das Innenrohr im Aussenrohr umschäumt werden, ohne dass Abstandshalter zwischen den Rohren benötigt werden.

## Patentansprüche

1. Verfahren zur Herstellung eines wärmeisolierten Leitungsrohrs (1), umfassend das Positionieren mindestens eines Innenrohrs (3) in einem Aussenrohr (2) unter Bildung eines Hohlraums (4) zwischen der Aussenwandung (6) des Innenrohrs (3) und der Innenwandung (7) des Aussenrohrs (2) sowie das Ausschäumen des Hohlraums (4), wobei das Innenrohr (2) durch Zugkraft in Längsrichtung der Rohre gerade verlaufend gehalten und derart gehalten umschäumt wird, wobei eine sich in Längsrichtung der herzustellenden Rohre erstreckende Rohraufnahme (20, 21) und beidseits der Längsenden der Rohraufnahme angeordnete Spannmittel (9, 9') verwendet werden, **dadurch gekennzeichnet, dass** mindestens ein die Spannmittel lösbar verbindendes Zugglied (10) verwendet wird, wobei die Spannmittel einen Antrieb (29) umfassen, durch welchen die einstellbare Zugkraft auf das Zugglied ausgeübt wird, und wobei ein Rohr entlang seiner Längserstreckung mindestens abschnittsweise vom Zugglied abgestützt wird, wobei als Zugglied (10) ein Stahlseil (11) verwendet wird, welches entlang seiner Längserstreckung mehrere für das Innenrohr bestimmte Zentrierelemente (16, 17) aufweist, wobei die Zentrierelemente durch koaxial zum Stahlseil verlaufende Abstandshalter (18) voneinander beabstandet sind.

2. Verfahren nach Anspruch 1, **dadurch gekennzeichnet, dass** das Innenrohr bei der Positionierung gerade gehalten wird.

3. Verfahren nach Anspruch 1 oder 2, **dadurch gekennzeichnet, dass** die Zugkraft auf das Zugglied (10) ausgeübt wird, welches dadurch gerade verlaufend gespannt wird, wodurch das mit dem Zugglied in Verbindung stehende Innenrohr die gerade verlaufende Form erhält.

4. Verfahren nach Anspruch 3, **dadurch gekennzeichnet, dass** das Zugglied im Innern des Innenrohrs verlaufend angeordnet wird und nach der Umschäumung aus dem Innenrohr entfernt wird.

5. Verfahren nach einem der Ansprüche 3 oder 4, **gekennzeichnet durch** die Schritte des Aufschiebens des Innenrohrs auf das Zugglied oder des Einziehens des Zugglieds in das Innenrohr, des Einbringens des Innenrohrs samt dem Zugglied in das Aussenrohr, des Spannens des Zugglieds **durch** Aufbringen der Zugkraft und der Positionierung von Aussen- und Innenrohr zur Bildung des definierten Hohlraums **durch** Lageveränderung des Aussenrohrs.

6. Verfahren nach Anspruch 1, **dadurch gekennzeichnet, dass** das Innenrohr im noch nicht gerade gezogenen Zustand lediglich mit seinen Enden in die gewünschte Lage relativ zum Aussenrohr gebracht, worauf erst dann das Innenrohr durch die Zugkraft für das Schäumen in die gerade Form gebracht wird.

7. Vorrichtung zur Herstellung von wärmeisolierten Leitungsrohren (1), welche jeweils ein Aussenrohr (2), mindestens ein Innenrohr (3) sowie eine den Raum zwischen Innenrohr und Aussenrohr ausfüllende geschäumte Isolation (14) aufweisen, wobei die Vorrichtung eine sich in Längsrichtung der herzustellenden Rohre erstreckende Rohraufnahme (20, 21) und beidseits der Längsenden der Rohraufnahme angeordnete Spannmittel (9, 9') aufweist, **dadurch gekennzeichnet, dass** die Vorrichtung mindestens ein die Spannmittel lösbar verbindendes Zugglied (10) aufweist, wobei die Spannmittel einen Antrieb (29) umfassen, durch welchen eine einstellbare Zugkraft auf das Zugglied ausübbar ist, und wobei das Zugglied zur mindestens abschnittsweisen Abstützung eines Rohrs entlang seiner Längserstreckung ausgebildet ist, wobei das Zugglied (10) von einem Stahlseil (11) gebildet ist, welches entlang seiner Längserstreckung mehrere für das Innenrohr bestimmte Zentrierelemente (16, 17) aufweist, wobei die Zentrierelemente durch koaxial zum Stahlseil verlaufende Abstandshalter (18) voneinander beabstandet sind.

8. Vorrichtung nach Anspruch 7, **dadurch gekennzeichnet, dass** die Rohraufnahme eine für das Aussenrohr bestimmte Auflage (21) aufweist, welche in ihrer Position relativ zu dem Zugglied einstellbar ist.

## Claims

1. Method for manufacturing a heat-insulated pipe (1), comprising the positioning of at least one inner duct (3) into an outer duct (2) creating a hollow space (4) between the outer wall (6) of the inner duct (3) and the inner wall (7) of the outer duct (2) as well as the injecting of foam into the hollow space (4), wherein the inner duct (2) is kept straight in longitudinal direction of the pipes by a tensile force and surrounded by foam in this position, wherein a pipe holder (20, 21) extending in longitudinal direction of the pipe to be manufactured and tensioning means (9, 9') arranged on both sides of the longitudinal ends of the pipe holder are used, at least a tension member (10) connecting the tensioning means in a detachable way is used, wherein the tensioning means comprise an actuator (29) by means of which the adjustable tensile force is exerted on the tension member, and wherein a pipe is supported by the tension member at least section-wise along its longitudinal extension, wherein a steel cable (11) is used as tension member, which has a plurality of centering elements (16, 17) targeted for the inner duct along its longitudinal extension, wherein the centering elements are spaced from one another by spacers (18) running coaxially to the steel cable.

2. Method according to claim 1, **characterized in that** the inner duct is held straight during the positioning step.

3. Method according to claim 1 or 2, **characterized in that** the tensile force is applied to the tension member (10) which is thereby held straight and tensioned, such that the inner duct which is in contact with the tension member is provided with the straight shape.

4. Method according to claim 3, **characterized in that** the tension member is arranged running on the inside of the inner duct and is removed from the inner duct after the foaming.

5. Method according to one of the claims 3 or 4, **characterized by** the steps of pushing the inner duct onto the tension member or of pulling the tension member into the inner duct, of inserting the inner duct together with the tension member into the outer duct, of tensioning the tension member by applying the tensile force and of positioning the outer duct and the inner duct for forming the defined hollow space by changing the position of the outer duct.

6. Method according to claim 1, **characterized in that** the inner duct is brought into the desired position with respect to the outer duct only with its ends and in a state of not yet being pulled straight, and it is only after that that the inner duct is brought into the straight shape by the tensile force for foaming.

7. Device for manufacturing heat-insulated pipes (1), each having an outer duct (2), at least one inner duct (3), as well as a foamed insulation (14) filling the space between the inner duct and the outer duct, wherein the device has a pipe holder (20, 21) extending in longitudinal direction of the pipe to be manufactured, tensioning means (9, 9') arranged on both sides of the longitudinal ends of the pipe holder, wherein the device has at least one tension member (10) connecting the tensioning means in a detachable way, wherein the tensioning means comprise an actuator (29) by means of which an adjustable tensile force is applicable to the tension member, and wherein the tension member is formed to support a duct along its longitudinal extension at least sectionwise, wherein the tension member (10) is formed by a steel cable (11) having multiple centering elements (16, 17) along its longitudinal extension, wherein the centering elements are spaced from one another by means of spacers (18) running coaxially to the steel cable.

8. Device according to claim 7, **characterized in that** the pipe holder has a bed (21) destined for the outer duct, which is adjustable with respect to its position relative to the tension member.

## Revendications

1. Procédé de fabrication d'un tuyau thermiquement isolé (1), comprenant le positionnement d'au moins un tube intérieur (3) dans un tube extérieur (2) en créant une cavité (4) entre la paroi extérieure (6) du tube intérieur (3) et la paroi intérieure (7) du tube extérieur (2) ainsi que l'injection de mousse dans la cavité (4), le tube intérieur (2) étant supporté tout droit par une force de traction en direction longitudinale des tuyaux, et, étant entouré de mousse en cet état, un support de tuyau (20, 21) s'étendant en direction longitudinale du tuyau à fabriquer et des moyens de tension (9, 9') arrangés des deux côtés des bouts longitudinaux du support de tuyau étant utilisés, au moins un membre de tension (10) connectant les moyens de tension de manière détachable étant utilisé, les moyens de tension comprenant un entrainement (29) par lequel la force de traction ajustable est exercée sur le membre de tension, et un tuyau étant supporté par le membre de tension au moins par tronçons le long de son extension longitudinale, un câble d'acier (11) étant utilisé comme membre de tension, ayant une pluralité d'éléments de centrage (16, 17) prévus pour le tube intérieur le long de son extension longitudinale, les éléments de centrage étant écartés l'un de l'autre par des espaceurs (18) qui s'étendent de manière coaxiale par rapport au câble d'acier.

2. Procédé selon la revendication 1, **caractérisé en ce que** le tube intérieur est supporté tout droit pendant l'étape de positionnement.

3. Procédé selon la revendication 1 ou 2, **caractérisé en ce que** la force de traction est appliquée au membre de tension (10) qui est ainsi supporté tout droit et tendu, de sorte que le tube intérieur, qui est en contact avec le membre de tension, reçoit la forme droite.

4. Procédé selon la revendication 3, **caractérisé en ce que** le membre de tension est arrangé de sorte qu'il s'étend à l'intérieur du tube intérieur et qu'il est enlevé du tube intérieur après le moussage.

5. Procédé selon l'une des revendications 3 ou 4, **caractérisé par** les étapes de pousser le tube intérieur sur le membre de tension ou de tirer le membre de tension dans le tube intérieur, d'introduire le tube intérieur ensemble avec le membre de tension dans le tube extérieur, de tendre le membre de tension en appliquant la force de tension et de positionner le tube extérieur et le tube intérieur pour former la cavité définie en changeant la position du tube extérieur.

6. Procédé selon la revendication 1, **caractérisé en ce que** le tube intérieur est apporté dans la position souhaitée par rapport au tube extérieur seulement avec ses bouts et dans un état pas encore tire droit, et uniquement après cela le tube intérieur est apporté dans la forme droite per la force de traction pour le moussage.

7. Dispositif de fabrication des tuyaux thermiquement isolés (1), chacun ayant un tube extérieur (2), au moins un tube intérieur (3), ainsi qu'une isolation moussée (14) qui remplit l'espace entre le tube intérieur et le tube extérieur, le dispositif ayant un support de tuyau (20, 21) s'étendant en direction longitudinale du tuyau à fabriquer, des moyens de tension (9, 9') arrangés des deux côtés des bouts longitudinaux du support de tuyau, le dispositif ayant au moins un membre de tension (10) connectant les moyens de tension de manière détachable, les moyens de tension comprenant un entrainement (29) à l'aide duquel une force de traction ajustable est applicable au membre de tension, et le membre de tension étant formé pour supporter un tube le long de son extension longitudinale au moins par tronçons, le membre de tension (10) étant formé par un câble d'acier (11) ayant des multiples éléments de centrage (16, 17) le long de son extension longitudinale, les éléments de centrage étant écartés l'un de l'autre à l'aide d'espaceurs (18) qui s'étendent de manière coaxiale par rapport au câble d'acier.

8. Dispositif selon la revendication 7, **caractérisé en ce que** le support de tuyau a un lit (21) destiné pour le tube extérieur, qui est ajustable par rapport à sa position relative au membre de tension.
